# EUROPÄISCHE PATENTSCHRIFT

(11) **EP 1 928 574 B1**
(45) Veröffentlichungstag und Bekanntmachung des Hinweises auf die Patenterteilung: **06.01.2010**
(21) Anmeldenummer: 06806879.0
(22) Anmeldetag: 28.09.2006
(51) Int. Cl.: B01D 45/08, B01D 50/00

(54) **ABSCHEIDER FÜR FLÜSSIGKEITEN, INSBESONDERE KONDENSAT, AUS FLÜSSIGKEITSBELADENEN, KOMPRIMIERTEN GASEN**
SEPARATOR FOR LIQUIDS, IN PARTICULAR CONDENSATE, FROM LIQUID-LOADED COMPRESSED GASES
SEPARATEUR POUR FLUIDES, NOTAMMENT POUR CONDENSATS, A BASE DE GAZ COMPRIMES CHARGES DE LIQUIDES

(30) Priorität: 30.09.2005 DE 102005046810
(43) Veröffentlichungstag der Anmeldung: 11.06.2008
(73) Patentinhaber: Zander Aufbereitungstechnik GmbH & Co.KG, 45219 Essen (DE)
(72) Erfinder: ZACHOS, Dr., Alexandros, 45136 Essen (DE)
(74) Vertreter: Cohausz & Florack
(86) Internationale Anmeldenummer: PCT/EP2006/066865
(87) Internationale Veröffentlichungsnummer: WO 2007/036560

(56) Entgegenhaltungen:
- DE-C- 415 378
- GB-A- 279 321
- GB-A- 381 717
- US-A- 2 689 623
- US-A- 4 516 994
- US-A- 5 112 375

## Beschreibung

Die Erfindung betrifft einen Abscheider für Flüssigkeiten, insbesondere Kondensat, aus flüssigkeitbeladenen, komprimierten Gasen, bei dem in einem topfförmigen Gehäuse mit einem am Boden des Gehäuses angeordneten Sammelraum für die abgeschiedene Flüssigkeit und einem als Deckel mit einer Gaszuleitung und einer Gasableitung ausgebildeten Kopfstück ein Abscheideelement angeordnet ist.

Abscheider dieser Art sind aus der Praxis bekannt. Sie dienen in der Regel vor allem dazu, in aus verschiedenen Komponenten, insbesondere einem Kälte- oder Adsorptionstrockner als Hauptkomponente aufgebauten Druckgasaufbereitungsanlagen durch Grobabscheidung von Kondensat aus den komprimierten Gasen die nachgeschalteten Vorfilter der Kälte- oder Adsorptionstrockner vor Überlastung durch Kondensat zu schützen, wobei unter "Kondensat" nicht nur kondensiertes Wasser, sondern auch andere Verunreinigungen der Gase wie kondensiertes Öl, kondensierte Öladditive, Feststoffpartikel etc. verstanden werden.

Aus Kostengründen strebt man an, sowohl für die Vorfilter als auch für Abscheider die gleichen Gehäuse zu verwenden. Dies ist aber nicht ohne weiteres möglich, weil bei Vorfiltern, die regelmäßig mit als Hohlzylinder ausgebildeten porösen Filterelementen bestückt sind, die Durchströmungsrichtung durch die Filterelemente von innen nach außen erfolgt, während bei den regelmäßig als Zyklonabscheider verwendeten Abscheidern die Strömungsrichtung umgekehrt ist. Dies liegt daran, dass bei Zyklonabscheidern die den Drall der Gase und deren Strömung gegen die Wand des Gehäuses bewirkenden Dralleinsätze eine Gaszuleitung im äußeren Bereich des Gehäuses erforderlich machen. Deshalb ist es erforderlich, die im Deckel angeordnete Gaszuleitung und Gasableitung gegenüber der in einem Vorfilter mit porösem Filterelement umzukehren. Hinzu kommt, dass Zyklonabscheider den grundsätzlichen Nachteil haben, dass ihr Wirkungsgrad wesentlich vom Volumenstrom der zu entfeuchtenden Gase abhängt. Bei unterschiedlich großen Filtergehäusen, die den gleichen Durchmesser, aber eine unterschiedliche Länge aufweisen, müssen bei Zyklonabscheidern die gleichen Dralleinsätze eingesetzt werden. Die größere Länge lässt sich also nicht zur Erhöhung des Wirkungsgrades der Abscheidung ausnutzen. Auch müssen für im Durchmesser unterschiedliche Gehäuse unterschiedlich dimensionierte Dralleinsätze verwendet werden.

Darüber hinaus ist aus der Patentliteratur (DE 196 50 359 A1) ein Abscheider für Flüssigkeiten aus flüssigkeitsladenden Gasen bekannt, bei dem das Gas über eine Gaszuleitung im Kopf des Gehäuses zugeführt und über drei konzentrisch zueinander angeordnete Kammern im Gehäuse über eine bodenseitige Gasableitung abgeleitet wird. Um das Gas von der zentralen Zuleitung radial nach außen durch die verschiedenen Kammern zu leiten, ist in der mittigen Kammer ein sich über die gesamte axiale Länge der Kammer erstreckendes spiralförmiges Leitelement vorgesehen, das die Gase über radiale Austrittsöffnungen in die mittlere Kammer leitet. In der mittleren Kammer findet eine Verwirbelung statt, die dafür sorgen soll, dass sich an den Wänden der mittleren Kammer Flüssigkeit abscheidet. Das aus der mittleren Kammer über radiale Öffnungen in die äußere Kammer strömende Gas wird hier ebenfalls verwirbelt und soll zu Flüssigkeitsabscheidungen führen.

Aus der US 2,689,623 ist ein Flüssigkeitsabscheider mit Sammelraum und einem Anschlussdeckel bekannt, welcher radial von innen nach außen durchströmte, konzentrisch angeordnete Abscheideelemente aufweist, durch die der Gasstrom labyrintartig geführt wird. Die US 5,112,375 offenbart eine Flüssigkeitsabscheiderkartusche mit radial um einen zylindrischen Hohlraum angeordneten Abscheidelamellen.

Der Erfindung liegt die Aufgabe zugrunde, einen Abscheider für Flüssigkeiten, insbesondere Kondensat, aus flüssigkeitbeladenen, komprimierten Gasen zu entwickeln, der einem Vorfilter vorgeschaltet werden kann, um das mit einem porösen Filtereinsatz bestückte Vorfilter der Druckgasaufbereitungsanlage vor Überlastung durch zu große Kondensatmengen zu schützen. Das verwendete Gehäuse soll universell sowohl als Vorfilter mit porösem Filtereinsatz als auch als Abscheider für die Flüssigkeit ohne wesentliche Umrüstarbeiten verwendbar sein.

Diese Aufgabe wird erfindungsgemäß bei einem Abscheider der eingangs genannten Art dadurch gelöst, dass das Abscheideelement als ein nach unten durch eine Bodenkappe verschlossener Hohlzylinder ausgebildet ist, der mit Abstand von der Wand des Gehäuses angeordnet und oben mit einer Adapterkappe an einen Auslass der Gaszuleitung angeschlossen ist, und dass die Wand des Abscheideelementes eine Vielzahl von von Leit- und Prallkörpern gebildeten Strömungsschikanen für die flüssigkeitbeladenen, komprimierten Gase aufweist, durch die die von der Gaszuleitung über die Adapterkappe in den Innenraum des Abscheideelementes eingeleiteten, flüssigkeitbeladenen, komprimierten Gase radial nach außen in den Zwischenraum zwischen der Wand des Gehäuses und dem Abscheideelement geleitet werden.

Bei dem erfindungsgemäßen Adapter werden anders als bei einem Zyklonabscheider die zu entfeuchtenden Gase von innen nach außen geleitet. Das bedeutet, dass diese Art der Führung des Volumenstroms gleich dem Volumenstrom bei einem Vorfilter mit aus porösem Material bestehenden hohlzylindrischem Filterelement ist. Deshalb können für den Abscheider und für das herkömmliche Vorfilter mit porösem Filterelement dieselben Gehäuse verwendet werden, ohne dass Umrüstungen bezüglich der Gaszuleitung und Gasableitung erforderlich sind. Für die Abscheideleistung ist bei dem erfindungsgemäßen Abscheider der Volumenstrom weniger kritisch als bei einem Zyklonabscheider. Da das Abscheideelement als Hohlzylinder gestaltet ist, kann das Abscheideelement an die Länge des Gehäuses angepasst werden. Dies erlaubt eine problemlose Berücksichtigung unterschiedlicher Volumenströme. Auch im Durchmesser unterschiedlich große Gehäuse lassen sich mit ein und demselben Abscheideelement bestücken, ohne dass dadurch die Wirksamkeit des Abscheiders beeinträchtigt wird. Schließlich ist es auch problemlos möglich, größere Abscheider, sogenannte Flanschfilter, bei denen in einem Gehäuse mehrere Gaszuleitungen einmünden und von denen nur eine Gasableitung abgeht, mit mehreren Abscheideelementen zu bestücken, weil im Gegensatz zu Zyklonabscheidern für die Abscheidung keine Gehäusewand benötigt wird.

Besonders vorteilhaft ist beim erfindungsgemäßen Abscheider die Kombination mit einem herkömmlichen Vorfilter mit einem Filterelement aus porösem Filtermaterial. Nach einer Ausgestaltung der Erfindung sitzt in diesem Fall das hohlzylindrische Abscheideelement in einem äußeren hohlzylindrischen Filterelement aus porösem Filtermaterial. Diese Kombination ist deshalb möglich, weil sowohl das erfindungsgemäße Abscheideelement als auch das herkömmliche Vorfilter einen Volumenstrom von innen nach außen erfordern. Man kann sich also bei dieser Kombination ein Extragehäuse für das Vorfilter ersparen.

Weitere Ausgestaltungen der Erfindung sind in den Unteransprüchen 2 bis 5 gekennzeichnet.

So sind vorzugsweise die Leit- und Prallkörper als Profilleisten ausgebildet und räumlich auf verschieden großen konzentrischen Zylindern angeordnet. Dabei sollten die inneren und äußeren Profilleisten auf Lücke angeordnet sein. So wird eine optimale Anströmung der Prallkörper und Umleitung der feuchtigkeitsbeladenen Gase aus dem Innenraum des Abscheidelementes nach außen gewährleistet.

Die Strömungsführung und Wirksamkeit der Abscheidung von Kondensat kann weiter dadurch verbessert werden, dass die inneren und äußeren Profilleisten einander zugekehrt sind und einander überlappen. Besonders günstig für die Strömungsführung ist, wenn die inneren Profilleisten zum Innenraum des Abscheidelementes und die äußeren Profilleisten zum äußeren Zwischenraum konvex, winklig oder U-förmig profiliert sind.

Im Folgenden wird die Erfindung anhand einer verschiedene Ausführungsbeispiele darstellenden Zeichnung näher erläutert. Im einzelnen zeigen:
- Fig. 1: einen Abscheider nach dem Prallprinzip im Axialschnitt,
- Fig. 2: den Abscheider gemäß Fig. 1 im Querschnitt nach Linie A-A der Fig. 1,
- Fig. 3: einen kombinierten Abscheider nach dem Prallprinzip mit einem herkömmlichen Vorfilter mit einem Filterelement aus porösem Filtermaterial im Axialschnitt,
- Fig. 4: den kombinierten Abscheider mit Vorfilter nach Fig. 3 im Querschnitt nach Linie A-A der Fig. 3,
- Fig. 5: ein Abscheideelement des Abscheiders gemäß Fig. 1 in Seitenansicht und vergrößerter Darstellung gegenüber Fig. 1,
- Fig. 6: das Abscheideelement gemäß Fig. 5 im Querschnitt nach Linie A-A der Fig. 5,
- Fig. 7: ein Abscheideelement im Querschnitt in einer zur Fig. 5 und 6 anderen Ausführung und
- Fig. 8: ein Abscheideelement im Querschnitt in einer zu den Figuren 5 bis 7 anderen Ausführung.

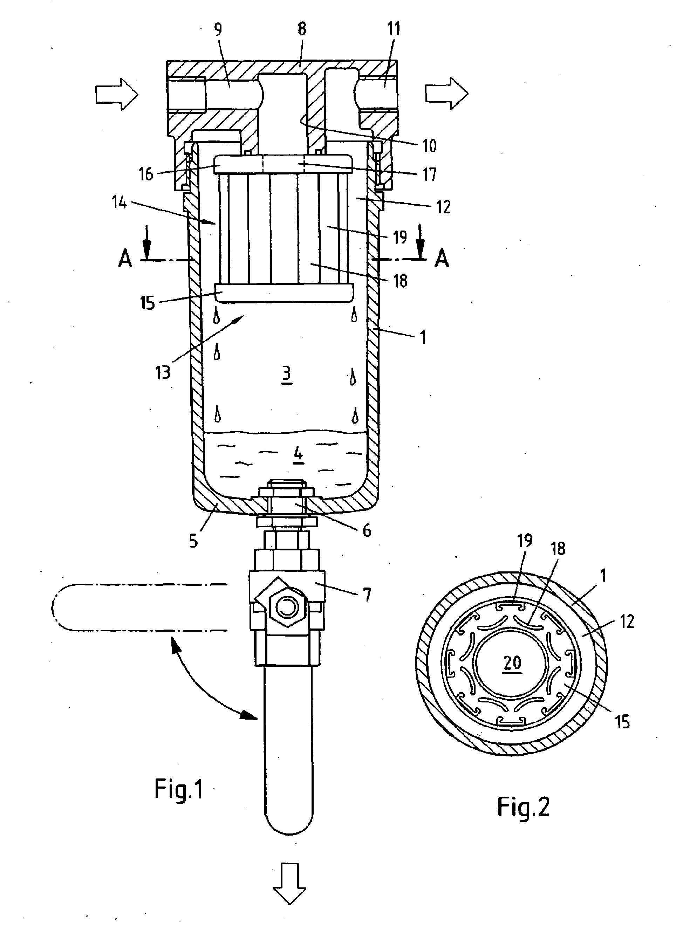

Der in Fig. 1 und 2 dargestellte Abscheider für feuchtigkeitsbeladene, komprimierte Gase weist ein topfförmiges, zylindrisches Gehäuse 1 mit einem unteren Sammelraum 3 für aus den Gasen abgeschiedene Flüssigkeit 4 auf. Im Boden 5 des Gehäuses 1 ist ein Auslass 6 mit einem Ventil 7 vorgesehen. Über diesen Auslass 6 kann die Flüssigkeit 4 abgelassen werden.

Das Gehäuse 1 ist oben durch ein als Deckel ausgebildetes aufschraubbares Kopfstück 8 verschlossen. Das Kopfstück 8 weist eine Gaszuleitung 9 mit einem zentralen Einlassstutzen 10 und eine Gasableitung 11 auf, der von einem Ringraum 12 an der Wand des Gehäuses 1 ausgeht.

An dem Einlassstutzen 10 ist dicht ein Abscheideelement 13 angeschlossen. Das Abscheideelement 13 ist als Hohlzylinder 14 ausgebildet, der unten durch eine Bodenkappe 15 abgeschlossen ist und oben durch eine Adapterkappe 16 mit einer zentralen Öffnung 17, in die der Einlassstutzen 10 einmündet. Die zylindrische Wand des Hohlzylinders 14 zwischen der Bodenkappe 15 und der Adapterkappe 16 ist nicht geschlossen, sondern radial durchlässig. Dafür weist sie eine Vielzahl von Strömungsschikanen 18, 19 auf, an denen in den feuchtigkeitsbeladenen Gasen enthaltene Feuchtigkeit zu einem großen Teil abgeschieden wird, wenn die eingeleiteten Gase vom Innenraum 20 des Hohlzylinders 14 in den äußeren Ringraum 12 zwischen dem Hohlzylinder 14 und der Wand des Gehäuses 1 gelangen. Diese Feuchtigkeit tropft dann nach unten in den Sammelraum 3 des Gehäuses 1 und sammelt sich, wie in Fig. 1 dargestellt ist.

Die Strömungsschikanen 18, 19 werden von Profilleisten gebildet, die geometrisch gesehen auf verschieden großen Zylindern angeordnet sind. Mit ihren Enden sind sie an der Bodenkappe 15 oder der Adapterkappe 16 gehalten. Jede Gruppe der Profilleisten ist mit Abstand voneinander angeordnet. Die Profilleisten verschiedener Gruppen sind jeweils auf Lücke angeordnet und überlappen einander.

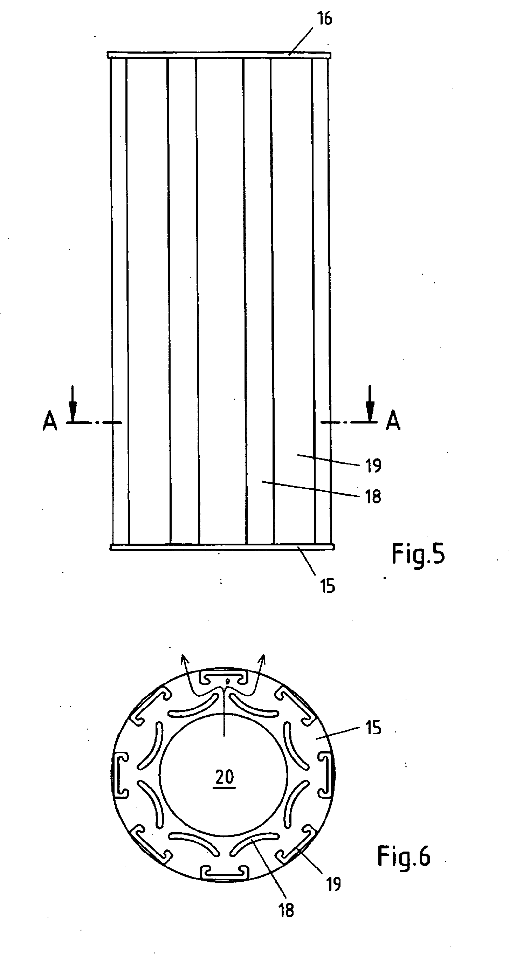

Beim Ausführungsbeispiel der Figuren 5 und 6 sind die inneren Profilleisten 18 zum Innenraum konvex gestaltet. Sie sind in erster Linie als Leitkörper ausgebildet, weil sie dafür sorgen, dass die zu entfeuchtenden Gase vom Innenraum 20 nach außen gegen die äußeren Profilleisten 19 strömen. Die Luft prallt also auf diese Profilleisten 19 auf, so dass sie in erster Linie als Prallkörper fungieren. Von den Profilleisten 19 werden die Gase umgelenkt und dann nochmals von den inneren Profilleisten 18 umgelenkt, um schließlich in den Ringraum 12 zu gelangen. Bei jedem Auftreffen auf die Leisten 18, 19, vor allen Dingen beim Auftreffen auf die äußeren Profilleisten 19 wird nach dem Prallprinzip Feuchtigkeit abgeschieden, die, wie in Fig. 1 dargestellt, an den Profilleisten 18, 19 abfließt und nach unten abtropft.

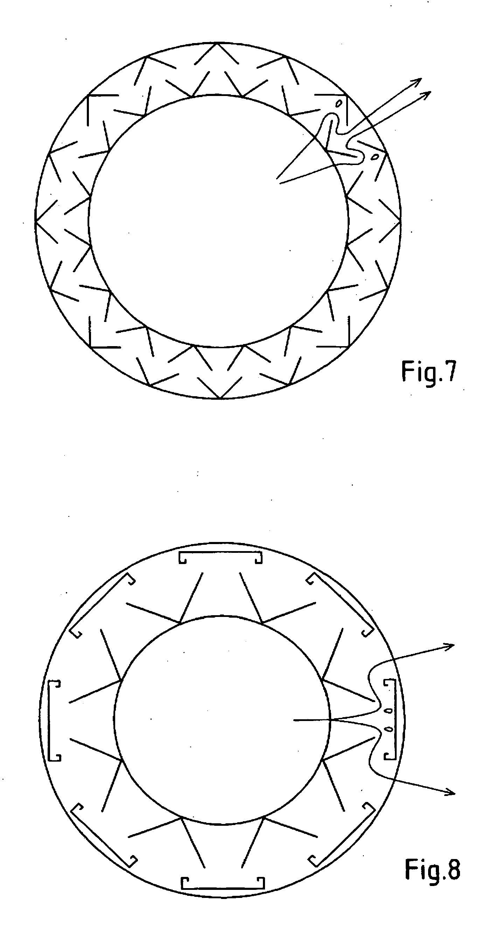

Das Ausführungsbeispiel der Fig. 7 unterscheidet sich von dem der Figuren 5 und 6 nur in der Form der inneren und äußeren Profilleisten.

Das Ausführungsbeispiel der Fig. 8 unterscheidet sich von den anderen Ausführungsbeispielen darin, dass hier eine Kombination aus den äußeren Leisten 19 des Ausführungsbeispiels der Figur 5 und 6 und den inneren Profilleisten des Ausführungsbeispiels der Fig. 7 realisiert ist.

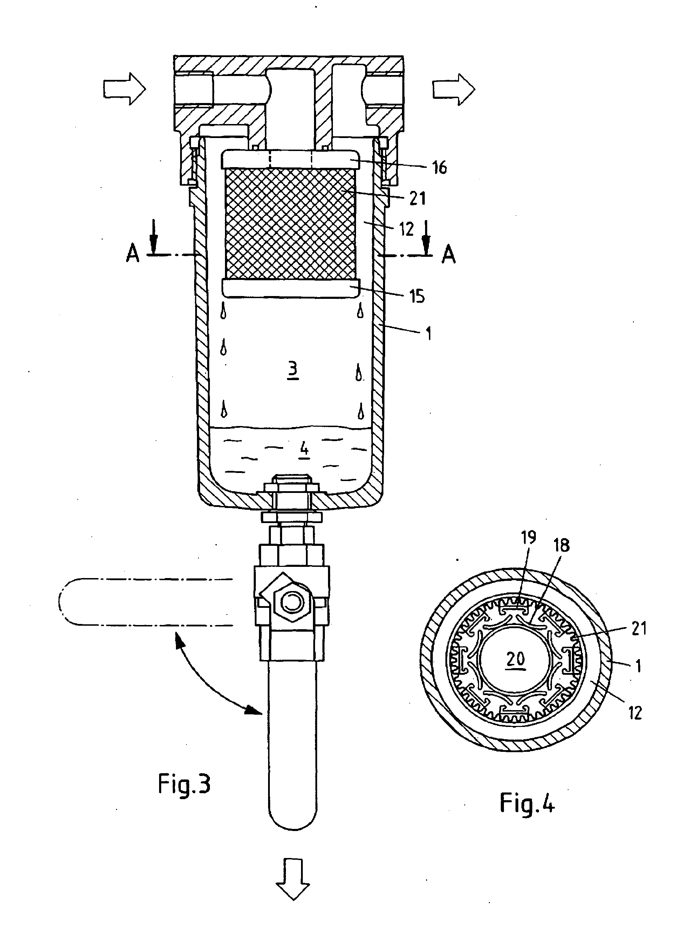

Das Ausführungsbeispiel der Figuren 3 und 4 unterscheidet sich von dem der Figuren 1 und 2 nur dadurch, dass der Hohlzylinder 14 des Abscheideelementes 13 in einem hohlzylindrischen Filterelement 21 aus porösem Filtermaterial sitzt. Das poröse Filtermaterial kann zur Vergrößerung der Oberfläche als plissierter Filterstoff ausgebildet sein.

Es versteht sich, dass weder der Hohlzylinder 14 des Abscheidelementes 13 noch das Filterelement 21 eine streng geometrische Zylinderform haben müssen. Entscheidend ist eine Form, die das radiale Durchströmen der Gase durch Schikanen von innen nach außen ermöglicht.

## Patentansprüche

1. Abscheider für Flüssigkeiten, insbesondere Kondensat, aus flüssigkeitsbeladenen, komprimierten Gasen, bei dem in einem topfförmigen Gehäuse (1) mit einem am Boden des Gehäuses (1) angeordneten Sammelraum (3) für die abgeschiedene Flüssigkeit (4) und einem als Deckel mit einer Gaszuleitung (9) und einer Gasableitung (11) ausgebildeten Kopfstück (8) ein Abscheideelement (13) angeordnet ist, **dadurch gekennzeichnet, dass** das Abscheidelement (13) als ein unten durch eine Bodenkappe (15) verschlossener Hohlzylinder (14) ausgebildet ist, der mit Abstand von der Wand des Gehäuses (1) angeordnet und oben mit einer Adapterkappe (16) an einen Auslass (10) der Gaszuleitung (9) angeschlossen ist, und dass die Wand des Hohlzylinders (14) des Abscheideelementes (13) eine Vielzahl von auf verschieden großen, konzentrischen Zylinderflächen und auf Lücke zueinander und parallel zur Hohlzylinderachse angeordneten Profilleisten aufweist, die als Leit- und Prallkörper Stömungsschikanen (18, 19) für die flüssigkeitsbeladenen, komprimierten Gase bilden, die von der Gaszuleitung (9) über die Adapterkappe (16) in den Innenraum (20) des Abscheideelementes (13) eingeleitet und von hier über die Strömungsschikanen (18, 19) radial nach außen in den Zwischenraum (12) zwischen der Wand des Gehäuses (1) und dem Abscheideelement (13) geleitet werden.

2. Abscheider nach Anspruch 1, **dadurch gekennzeichnet, dass** die inneren und äußeren Profilleisten einander zugekehrt sind und einander überlappen.

3. Abscheider nach Anspruch 2 oder 3, **dadurch gekennzeichnet, dass** die inneren Profilleisten zum Innenraum (20) des Abscheideelementes (13) und die äußeren Profilleisten zum äußeren Zwischenraum (12) konvex, winklig oder U-förmig profiliert sind.

4. Abscheider nach einem der Ansprüche 1 bis 3, **dadurch gekennzeichnet, dass** das Abscheideelement (13) in einem äußeren hohlzylindrischen Filterelement (21) sitzt.

## Claims

1. Separator for fluids, in particular condensate, from fluid-laden compressed gases, with which separator a separator element (13) is arranged in a pot-shaped housing (1) with a collection chamber (3), arranged at the base of the housing (1), for the separated fluid (4) and a head piece (8) designed as a cover with a gas feed line (9) and a gas outlet line (11), **characterised in that** the separator element (13) is designed as a hollow cylinder (14) closed below by a base cap (15), which is arranged at a distance from the wall of the housing (1) and is connected at the top by an adapter cap (16) to an outlet (10) of the gas feed line (9), and **in that** the wall of the hollow cylinder (14) of the separator element (13) has a plurality of profiled strips arranged on concentric cylinder surfaces of different sizes and arranged with a gap between one another and parallel to the hollow cylinder, which as guide and impact bodies form flow chicanes (18, 19) for the fluid-laden compressed gases, which are conducted from the gas feed line (9) via the adapter cap (16) into the interior (20) of the separator element (13) and from here are conducted via the flow chicanes (18, 19) radially outwards into the intermediate space (12) between the wall of the housing (1) and the separator element (13).

2. Separator according to Claim 1, **characterised in that** the inner and outer profiled strips face one another and overlap one another.

3. Separator according to Claim 2 or 3, **characterised in that** the inner profiled strips are profiled to the interior (20) of the separator element (13) and the outer profiled strips are profiled to the outer intermediate space (12) in a convex, angled, or U-shaped fashion.

4. Separator according to one of claims 1 to 3, **characterised in that** the separator element (13) sits in an outer, hollow cylindrical filter element (21).

## Revendications

1. Séparateur pour fluides, en particulier pour condensat à base de gaz comprimés chargés de liquide, dans lequel un élément séparateur (13) est disposé dans un carter (1) en forme de pot, avec une chambre collectrice (3), disposée au fond du carter (1) pour recueillir le fluide éliminé (4), et avec une pièce de tête (8), réalisée en forme de couvercle, avec une conduite d'amenée de gaz (9) et une conduite de dérivation de gaz (11), **caractérisé en ce que** l'élément séparateur (13) est réalisé sous la forme d'un cylindre creux (14), fermé, en bas, par une calotte de fond (15), lequel est disposé à distance de la paroi du carter (1) et est raccordé, en haut, par une calotte adaptatrice (16), à une sortie (10) de la conduite d'amenée de gaz (9), et **en ce que** la paroi du cylindre creux (14) de l'élément séparateur (13) présente de nombreuses barres profilées, qui, disposées, par rapport les unes aux autres et parallèlement à l'axe du cylindre creux, sur des surfaces du cylindre concentriques, de différentes grandeurs, et sur des intervalles, forment, en tant que corps de guidage et de déflexion, des chicanes (18, 19) pour l'écoulement des gaz comprimés, chargés de liquide, qui, en provenance de la conduite d'amenée de gaz (9), sont introduits dans l'espace intérieur (20) de l'élément séparateur (13), par l'intermédiaire de la calotte adaptatrice (16), et qui, de là, sont conduits, par l'intermédiaire des chicanes d'écoulement (18, 19), en direction radiale, vers l'extérieur, dans l'espace intermédiaire (12) entre la paroi du carter (1) et l'élément séparateur (13).

2. Séparateur selon la revendication 1, **caractérisé en ce que** les barres profilées intérieures et extérieures sont orientées les unes vers les autres et se chevauchent.

3. Séparateur selon revendication 2 ou 3, **caractérisé en ce que** les barres profilées intérieures, en direction de l'espace intérieur (20) de l'élément séparateur (13), et les barres profilées extérieures, en direction de l'espace intermédiaire extérieur (12), présentent des profils convexes, en cornière ou en forme de U.

4. Séparateur selon l'une des revendications 1 à 3, **caractérisé en ce que** l'élément séparateur (13) est logé dans un élément filtrant (21) extérieur, en forme de cylindre creux.
